# EUROPEAN PATENT APPLICATION

(11) **EP 1 440 938 A1**
(43) Date of publication of application: **28.07.2004**
(21) Application number: 03290099.5
(22) Date of filing: 14.01.2003
(51) Int. Cl.: C01F 7/47, C01F 7/06

(54) **Process to remove organic impurities from Bayer process liquor using ozone**

(71) Applicant: Ozonia AG, 8600 Dübendorf (CH)
(72) Inventor: Rudolf, Jenny, 3112 Allmendingen b. Bern (CH)
(74) Representative: Peaucelle, Chantal

(57) **Abstract**

A process for transforming organic carbon into removable carbonate and oxalate in Bayer process liquor, including decoloration is provided involving the steps of contacting an ozone-oxygen mixture with a Bayer process liquor, reducing the foam formed by the Bayer process liquor, controlling the temperature of the Bayer process liquor, and eliminating excess ozone in the offgas of the ozonation step, thereby reducing organic impurities in the Bayer process liquor.

## Description

### Field of the Invention

This invention relates broadly to the purification of Bayer process liquor. More specifically, this invention relates to a process for removing organic impurities from Bayer process liquor.

### Background of the Invention

Alumina-containing ores, such as bauxite, are used as a source of alumina trihydrate. Digestion of bauxite with a caustic medium at selected temperatures and pressures in a so-called "Bayer process" results in a saturated sodium aluminate liquor from which the alumina content is precipitated. Unfortunately, bauxite contains always organic carbon that contaminates the saturated sodium aluminate liquor. Accumulation of such organic carbon can impede efficient production of the alumina trihydrate. Further, Bayer process liquor is coloured due to the high organic carbon. The colour of the liquor is of importance concerning the brightness (whiteness) of the precipitated alumina trihydrate.

Accordingly, it is desirable to provide a method for safely and effectively transforming organic carbon into removable carbonate and oxalate and, simultaneously, decolorize the Bayer process liquor.

### Summary of the Invention

This invention is directed to a method for transforming organic carbon into removable carbonate and oxalate and to decolorize Bayer process liquor. More specifically, the invention is directed to contacting a mixture of ozone and oxygen with Bayer process liquor to efficiently transform organic carbon into removable carbonate and oxalate and to decolorize the Bayer process liquor. Thus, in one aspect, the invention relates to a process for transforming organic carbon into removable carbonate and/or oxalate in Bayer process liquor including controlling the temperature and viscosity of the Bayer process liquor within selected ranges, substantially reducing foam formed by the Bayer process liquor and causing the transfer by contacting an ozone-oxygen mixture with the Bayer process liquor and substantially eliminating excess ozone in offgas produced by the Bayer process liquor.

In another aspect, the invention relates to a process for decoloring Bayer process liquor including controlling the temperature and viscosity of the Bayer process liquor within selected ranges, transforming color containing organic carbon in the Bayer liquor into substantially colorless carbonate and/or oxalate by contacting an ozone-oxygen mixture with the Bayer process liquor, and substantially eliminating excess ozone in offgas produced by the Bayer process liquor.

In yet another aspect, the invention relates to a process for enhancing efficiency of removing alumina hydrate from Bayer process liquor including controlling the temperature and viscosity of the Bayer process liquor within selected ranges, increasing the solubility of the alumina hydrate by reducing the amount of organic carbon in the Bayer process liquor, and precipitating increased quantities of alumina hydrate by cooling the Bayer process liquor

### Detailed Description of the Invention

Bayer process liquor already has a very high carbonate content, carbonate being an effective radical-scavenger. Thus, in accordance with this invention, a mixture of ozone and oxygen is added to the Bayer process liquor to transform organic carbon into removable carbonate and oxalate in the liquor. It is preferred that the amount of ozone in the ozone-oxygen mixture be in the range of about 8% to about 14% by weight. The ozone-oxygen mixture may be added to the liquor at any point in the Bayer process. However, preferred locations include the spent liquor, slurries of spent liquor and bauxite, and slurries containing aluminum trihydrate.

The ozone-oxygen mixture may be added to the Bayer process liquor by any known method. However, simply dissolving ozone in the bulk Bayer process liquor will reduce the impact to the total organic carbon (TOC) because of scavenger effects of carbonate. Therefore, distribution of the ozone into the Bayer process liquor requires dispersal of the ozone in bubbles of appropriate size and number. Typical dispersal equipment may be used for contacting the ozone-oxygen mixture with the Bayer process liquor. A combination of a reactor with pump circuit with integrated addition of ozone to the Bayer process liquor by a venturi and a second mixer in the form of a radial diffuser is preferably used.

Bayer process liquor tends to form large amounts of foam due to its high TOC content, its high viscosity, and the presence of a sodium-hydroxide solution in a concentration of about 20%. While antifoamant may be used, antifoamant will add undesirably to the level of TOC already present in the Bayer process liquor. Thus, it is preferable to use a mechanical foam destruction system to reduce the amount of foam to a predetermined level. It is preferable to reduce the foam level without completely destroying it, as foam is a mixture of gas and liquid with a large surface area and high mass transfer rate. In addition, the foam serves to absorb partial aerosols. Therefore, it is preferable to use the foam phase to obtain high ozone efficiency. Examples of a mechanical foam destruction system include one or more nozzles or sprayers. For continuous work "behind" the foam phase in a technical plant environment, the reactor is preferably equipped with both a mechanical foam destruction system and optional-use antifoamant. The antifoamant may be used desirably, for example, in the event of an emergency. For example, one or more nozzles may be positioned on top of the reactor, fed with a bypass from the pump-circuit, equipped with the optional ability of adding antifoamant prior to the action of the nozzles.

In a Bayer plant, the temperature of the Bayer process liquor is critical because a decrease in temperature of the Bayer process liquor requires reheating of the liquor, which adds undesirably to the consumption of energy. The ozonation temperature is about 50°C to about 80°C. The ozonation temperature influences the ratio of ozone/TOC removed such that better results are achieved at lower temperatures. Viscosity, which is a function of temperature, also is a critical feature impacting the efficiency of the contacting system. The relationship between temperature and viscosity is not simply linear. The viscosity needed for optimal mixing is reached at a temperature of about 60°C. Higher temperatures do not achieve a better mixing efficiency but rather lower the ozone/TOC removal efficiency. Therefore, the temperature should be high enough to avoid a cooling system requiring reheating after ozonation and to produce a viscosity within the optimal range of the contacting system. With respect to the ratio of ozone/TOC removed, the temperature is preferably closer to 50°C than to 80°C. Additionally, as a function of reduction of TOC, a precipitation of aluminum hydrate will occur. This effect is more pronounced at lower temperatures. A reactor with a jacket serving as a heating/cooling system to maintain a constant temperature, preferably at a constant level of 60°C which results in a Bayer process liquor having a water-like viscosity, may be used to achieve the desired temperature and viscosity.

TOC may be removed from the Bayer process liquor system in one of two ways: oxalate precipitation and carbonate precipitation. Thus, ozonation converts TOC into oxalate and carbonate. As carbonate is a scavenger, ozone is preferably added after carbonate precipitation to achieve the lowest carbonate concentration and the lowest possible loss of ozone by scavenger effects in the Bayer process liquor. One possibility is to install the ozone step after the carbonate and oxalate elimination step in the form of a side step, bypassing the main stream of Bayer process liquor.

The reduction of TOC has a direct impact on the solubility of alumina hydrate. Lowering the TOC increases the solubility of hydrate at high temperatures. This means that when the liquor is cooled down, more hydrate is precipitated and, therefore, the yield is better. This results in a higher massflow (concerning alumina hydrate) in the overall plant. In other words, more hydrate can be produced with the same volume of liquor when the TOC has been transformed. This is a main advantage of invention.

In a typical plant, a VOD would be needed after ozonation even if the ozone absorption as a percentage of ozone input were greater than 95%. On a large scale, even 5% is a considerable amount of ozone. It is, therefore, preferable to use a gaswasher as a means of chemical vent ozone destruction to treat Bayer process liquor to absorb ozone in the offgas. The gaswasher may be used to destroy up to about 100% of the produced ozone and thus is highly efficient. Thus, the use of a gaswasher can eliminate the need for a VOD.

Because the reaction of ozone with organics in Bayer process liquor occurs under alkaline conditions, the reaction chain produces hydroxyl radicals. Under such alkaline conditions, aerosols will accrue during ozonation. Thus, assuming that the process is performed after (or "behind") the foam phase, "blowing out" of the aerosols should be avoided (corrosion and deposits of solids in pipes and analyzers). The Bayer process liquor gaswasher previously proposed solves this problem. With a VOD, however, a device to remove aerosols from the offgas is necessary. Since the gas after the washer is free of ozone and because the ozone concentration of the washer feedgas is less than 5% of the input of the first ozonation, no aerosols form after processing by the gaswasher.

This invention solves the above-identified problems associated with prior processes for removing organic impurities from Bayer process liquor by contacting ozone with the Bayer process liquor, controlling the temperature of the reaction, controlling the foam, and eliminating the unused ozone from the product.

## Claims

1. A process for transforming organic carbon into removable carbonate and/or oxalate in Bayer process liquor comprising:
controlling the temperature and viscosity of said Bayer process liquor within selected ranges,
substantially reducing foam formed by said Bayer process liquor and causing said transfer by contacting an ozone-oxygen mixture with the Bayer process liquor, and
substantially eliminating excess ozone in offgas produced by the Bayer process liquor.

2. The process according to claim 1, wherein said ozone-oxygen mixture is dispersed into the Bayer process liquor in the form of bubbles.

3. The process according to claim 2, wherein said ozone-oxygen mixture is dispersed by a venturi.

4. The process according to claim 1, wherein said foam is further reduced by a mechanical foam reduction system.

5. The process according to claim 1, wherein said foam is further reduced by an antifoamant.

6. The process according to claim 1, wherein the temperature of said Bayer process liquor is about 50°C to about 80°C.

7. The process according to claim 1, wherein the temperature of said Bayer process liquor is about 50°C.

8. The process according to claim 1, further comprising substantially increasing the amount of removable carbonate and oxalate in already existing precipitation steps from said Bayer process liquor.

9. The process according to claim 1, wherein said substantial elimination of excess ozone in the offgas is performed by a gaswasher.

10. A process for decoloring Bayer process liquor comprising:
controlling the temperature and viscosity of said Bayer process liquor within selected ranges;
transforming color containing organic carbon in the Bayer liquor into colorless carbonate and/or oxalate by contacting an ozone-oxygen mixture with the Bayer process liquor; and
substantially eliminating excess ozone in offgas produced by the Bayer process liquor.

11. The process according to claim 10, wherein the ozone-oxygen mixture substantially reduces foam formed by the Bayer process liquor.

12. The process according to claim 10, wherein the temperature of said Bayer process liquor is about 50°C to about 80°C.

13. The process according to claim 10, wherein the temperature of said Bayer process liquor is about 50°C.

14. A process for enhancing efficiency of removing alumina hydrate from Bayer process liquor comprising:
controlling the temperature and viscosity of said Bayer process liquor within selected ranges;
increasing the solubility of the alumina hydrate by reducing the amount of organic carbon in the Bayer process liquor; and
precipitating increased quantities of alumina hydrate by cooling the Bayer process liquor.

15. The process of claim 14, wherein the organic carbon is reduced by transformation into removable carbonate and/or oxalate.

16. The process of claim 15, wherein the organic carbon is transformed by contact with an ozone-oxygen mixture.

17. The process according to claim 14, wherein the temperature of said Bayer process liquor is about 50°C to about 80°C.

18. The process according to claim 14, wherein the temperature of said Bayer process liquor is about 50°C.

19. The process according to claim 14, wherein the ozone-oxygen mixture substantially reduces foam formed by the Bayer process liquor.
